# EUROPEAN PATENT SPECIFICATION

(11) **EP 1 034 224 B1**
(45) Date of publication and mention of the grant of the patent: **05.01.2005**
(21) Application number: 98949003.2
(22) Date of filing: 02.10.1998
(51) Int. Cl.: C09D 5/14, C09D 5/03, A01N 25/12

(54) **BIOCIDAL POWDER COATING COMPOSITION, ITS PREPARATION AND USE**
BIOZIDE PULVERLACKZUSAMMENSETZUNG, IHRE HERSTELLUNG UND VERWENDUNG
COMPOSITION DE REVETEMENT EN POUDRE BIOCIDE

(30) Priority: 03.10.1997 US 61099 P
(43) Date of publication of application: 13.09.2000
(73) Proprietor: E.I. DUPONT DE NEMOURS AND COMPANY, Wilmington, DE 19808 (US)
(72) Inventor: CUMMINGS, Frederick, L., Richmond, TX 77469 (US); GOTTSCHLING, Peter, Friendswood, TX 77546 (US); HAGERLIN, Jeffrey, R., Houston, TX 77041 (US)
(74) Representative: Gille Hrabal Struck Neidlein Prop Roos
(86) International application number: PCT/EP1998/006282
(87) International publication number: WO 1999/018162

(56) References cited:
- WO-A-97/46626
- GB-A- 2 297 552
- US-A- 4 663 359
- US-A- 5 118 346

## Description

The present invention relates to a biocidal powder coating composition which may be used for coating a product for use for example in a bacteria- and/or fungus-laden environment. Further, the present invention relates to a process for the production of the biocidal powder coating composition, its use for coating substrates as well as the coated substrates.

There is a need for material and products that have the capability of inhibiting, controlling or eliminating bacterial or fungal growth to promote increased hygienic and sanitary conditions. A coating powder that contains antibacterial and/or antifungal agent(s) may meet this need. When the coating powder formulation is applied to an article, contact with the coating may kill or inhibit the growth of certain specific bacteria like Staphylococcus aureas, Escherichia coli, Bacillus subtitles, Streptococcus facades, Salmonella typhinurium, Pseudomonas aeruginosa, Gram positive bacteria, and other Gram negative bacteria. It may also inhibit the growth of certain higher organisms like algae, fungi, filamentous fungi (Aspergillus, Aureobasidium, Botrytis, Ceratostomella, Cuvularia, Fusarium, and Penicillium species), yeasts and some viruses. Potential applications for such powder coatings may include shelving or cabinets for food preparation, storage and display, restroom stall separators, urinals, bedpans, grease traps, fry basket handles, surgical instruments, garbage disposals, stockyard gates, feed troughs, school fixtures, counter tops, toilet seats and handles, swimming pool hardware, rails, banisters, medical instrument trays, utensils and handles, dishwashers, car seats, public access/use fixtures, faucets and doorknobs, waste containers, chair seats, stools, benches, sinks, bus and train railings, toys, medical furniture and fixtures, medical equipment and other industrial, agricultural or consumer products.

Biocidal resin powders are known. Thus, JP-A-8060036 refers to a mixture of polyester powder and fine particles of Zeolite carrying ions of a specified metal. US-A-4,663,364 refers to a biocidal powder in the form of a suspension which is applicable to germicides, herbicides, insecticides and miticides. EP-A-0 732 052 is concerned with an antimicrobial polymer composition comprising an antimicrobial coat of an aluminosilicate on the surface of silica gel, wherein the aluminoslllcate contains antimicrobial metal ions. JP-A06057032 refers to an antifungal nylon composition which can be used for different purposes. US-A-3,988,294 refers to surface coating compositions resistant to the attack by fungi and other microorganisms. A mold inhibitor is added to the basic formulation together with the pigment. GB-A-2119822 refers to antimicrobially treated fabric constructions. EP-A-0 113 254 refers to non-woven fabric having a minor amount of an antimicrobial agent incorporated therein, wherein the antimicrobial agent is in a colloidal suspension within amorphous zones of the polymeric binding agent. US-A-5,118,346 refers to an antimicrobial material; it can be used as an additive for coating materials, e.g. powder coatings.

US-A-4,663,359 refers to a biocidal material. A thermoplastic resin powder is mixed with a microbiocide. The resulting composition is added to another thermoplastic material in order to prepare articles having a specific microbiocidal activity. For example, GB-A 2 297 552 and WO 97/46 626 describe a powder coating composition which contains a dry powder in association with a biocide for coating metal like ferrous metals, zinc coated steels and aluminium. Suitable classes of biocides are diphenylethers, dimethyl urea and carbamates.

The biocide powder may be mixed with the powder resins, particularly polyesters and epoxypolyesters, and hardeners to form the matrix of the coating composition or it may be incorporated in the matrix powder. For this purpose the biocide must have the same physical characteristics and a similar particle size distribution to that of the matrix powder. Further, an excellent mixing of the constituents is required. Proportions of the biocide are from 0,1 to 10 % by weight of the total powder composition.

US-A-4 629 645 relates to a mold-inhibitive coated sheet for application to a surface of walls, floors or ceilings which contain a layer of a powder coating containing a mold fungicide. Fungicides may be for example benzimidazoles. The fungicide powder is added into the resin during the preparation of the powder coating material or it is mixed together with the resin in the so-called dry blend method.

US-A- 5 238 749 describes an antimicrobial powder composition for coating of metals and other substrates. The substrates may be coated with a combination of a thermosetting and a thermoplastic material, either or both of which may incorporate an antimicrobial agent. Suitable thermosetting resins are for example amine cured epoxides like diglycidyl ether of bisphenol-A. Suitable thermoplastic material are for example nylon 11, polyvinylidene fluoride polymer, polyethylene. As antimicrobial agent may especially be used chlorinated phenols and biguanimide hydrochlorides. The powdery antimicrobial agent is customary mixed with the thermoplastic or thermosetting material.

The above described production processes of biocidal powder coating compositions may disadvantageously influence the biocidal activity of the composition. A non excellent mixing of the constituents of the biocidal coating composition and an inhomogeneous distribution of the biocide, the resins and hardeners and any other contituents to the powder particles may reduce the biocidal activity and/or the quality of the coating. Because of the shearing stress a strong mixing and extruding process may destroy the particles and reduce the biocide activity too.

The object of the present invention is to provide a biocidal powder coating composition which allows contrary to the prior art a stable biocidal activity of the coated products for a long time and which moreover effects excellent coated film properties, preferably chemical and corrosion resistance. Another object of the present invention is a process for the production of the biocidal powder coating composition which allows a simple production process for a homogeneous distribution of the biocide to the coating composition.

The object is achieved by a biocidal coating powder composition comprising thermoplastic and/or thermosetting resins, based on epoxy, polyester, acrylic and/or polyurethane resins, and biocides, wherein the biocides are liquid bioactive materials, liquid biocides mixed with particles of a solid support material, and/or selected solid bioactive materials which do not react with the other components of the composition, characterized in that the biocides are homogenously mixed or bonded with the particles of the thermoplastic and/or thermosetting powder,
a) by treating the individual powder coating particles to soften their surface and adhering the bioactive material and bonding it homogenously to them or
b) by dissolving or mixing the biocides and the other components of the powder coating formulation in an organic liquid or supercritical fluid and removing the liquid.

The object of the invention is especially achieved by the provision of a biocidal powder coating composition, comprising:
80 to 99,99 % by weight of the total resin of one or more thermosetting and/or thermoplastic resins based on epoxy, polyester, acrylate and/or polyurethane resins and
0,01 to 20 % by weight of the total resin of one or more liquid biocides and/or specially selected solid biocides.

The liquid biocides and the specially selected solid biocides are non-reactive biocides. Non-reactive biocides are biocides which do not react with the other components of the composition to any significant extent, i.e. to the degree that their ability to exhibit antibacterial or antifungal properties is adversely affected.

Preferably those bioactive materials should not contain free organic acid groups, free amine groups, primary alcohol groups or oxirane groups. Generally, a suitable bioactive material may contain the following functional groups: amide, secondary amine, substituted carbamate, cyano (or nitrile), halogen, esters, metal salts, nitro, phenolic, sulfone, thiazine, thiazole, thiazolinone, and thiophthalimide.

As biocides, liquid bioactive material and/or specially selected solid bioactive material may particularly be used.

Examples for the biocides are phthalimides, e.g. thiolphthalimides; acetamides, e.g. cyanoacetamides and bromocyanoacetamides; phthalonitriles; hydroxy benzoates, e.g. propyl and butyl hydroxy benzoates; isothiazolinones; thiazine thiones, e.g. dimethyltetrahydrothiazine thiones; nitropropane diols, e.g. bromonitropropane diols; carbamates; methyl ureas; benzimidazoles; salicylanilides; mercury acetates; organozinc compounds; tolysulfones, e.g. iodomethyltolysulfones and combinations of them.

Liquid biocides are preferably biocides which cannot be dry blended into a powder to yield an effective coating or which may be pulverized only under complicated conditions. Liquid biocides are, for example and preferably, cyanoacetamides, for example, dibromocyanoacetamides (Amerstad ®300), and liquid thiazine-thiones and combinations of them.

As specially selected solid bioactive material may be used solid or powdered biocides, e.g., selected from the group of thiazine-thiones, e.g. 3,5-dimethyltetrahydro-1,3,5-2H-thiazine-2-thione (Nuosept ®S); thiolphthalimides, e.g. N-(trichloromethylthiolphthalimide (Fungitrol ®11); hydroxybenzoates, e.g. propyl- and butyl-p-hydroxybenzoate (Propyl Parabens ® and Butyl Parabens ®); phthalonitriles, e.g. tetrachloroisophthalonitrite (Nuocide ®960); nitropropandiols, e.g. 2-bromo-2-nitropropane-1,3-diol (Canguard ®409); tolysulfones, e.g. diiodomethyl-p-tolysulfone (Amical ®WP) and combinations of them.

Preferably, 2-bromo-2-nitropropane-1,3-diol (Canguard ®409), diiodomethyl-p-tolysulfone (Amical ®WP), 3,5-dimethyltetrahydro-1,3,5-2H-thiazine-2-thione (Nuosept ®S), N-(trichloromethylthiolphthalimide (Fungitrol ®11), butyl-p-hydroxybenzoate (Butyl Porabens ®) and combinations of them are usable.

For a given powder coating matrix factors like molecular size, polarity of the functional groups and the solubility of the bioactive materials can be considered.

The amount of bioactive material incorporated in the powder coating composition may vary from 0,01 to 20 % by weight of the resin, depending on the intent and use and the strange and major of the bioactive material. Suitable amounts are from 0,01 to 10 % by weight of the resins, e.g. from 0,05 to 8 % by weight.

As suitable thermosetting and/or thermoplastic material may be used resins based on polyepoxy, polyester, polyacrylate and/or polyurethane compounds. Especially suitable thermosetting resins are for example resins based on saturated and/or unsaturated, carboxyl- and/or hydroxyl-containing polyesters, polyepoxides and/or polyester epoxides, preferably epoxides of the family diglycidylether of bisphenol A. Other example of those resin-types are polymer reaction products of bisphenol A and epichlorhydrin and reaction products of bisphenol A and epichlorhydrin mixed with bisphenol A and 2-methylimidazole.

Other thermoplastic or thermosetting resins may be used too, for example polyurethanes, polyester-urethanes, poly(meth)acrylates, poly(meth)acrylics, modified copolymers such as copolymers with epoxide, carboxyl, isocyanate and/or amide group modifications, and hybrides (mixture of epoxypolyester and epoxyacrylic resins) are expected to be good candidates for the contemplated applications.

"(Meth)acryl" is synonym for acryl and/or methacryl compounds.

The thermosetting and/or thermoplastic resin material can partial replaced by further resins such as epoxy novolak, phenolic resins and melamine resins. Examples of phenolic resins are resoles or novolaks, examples of melamine resins are butanol and/or methanol-etherified melamines.

Hardener components are present in customary amounts, generally in an amount for reaction with functional groups of the resin components in order to achieve the desired degree of crosslinking.
As hardeners can be employed customary hardeners for the thermosetting and thermoplastic resins. Examples of hardeners which can be employed are dicyandiamide and its derivates, carboxylic acids and their anhydrides, cycloaliphatic, aliphatic or aromatic polyisocyanates, epoxy functional crosslinkers, for example triglycidyl isocyanurate (TGIC), polyglycidyl ethers based on diethylene glycol, glycidyl-functionalised (meth)acrylic copolymers and also amino-, amido- or hydroxyl-containing crosslinkers.

It is possible to add inorganic and/or organic pigments, fillers and/or customary additives in the conventional amounts to enhance specific physical properties, aesthetics, durability or other attributes. The customary coatings additives are the additives familiar in the coating sector. The amounts are within the usual range familiar to the skilled worker. For example, the compositions can contain from 0 to 50 % by weight of one ore more pigments and/or fillers. The amount of additives can be, for example, from 0,01 to 10 % by weight.

Examples for pigments and/or fillers are metallic powders, titanium dioxide, iron oxide, magnesium oxide, zinc chromate, carbon black, barium sulfate, Para Red, Thio Indigo, Anthraquinone, Phthalocyanine Blue, Azo. Examples for customary coating additives are thixotropic agents, levelling agents, accelerators, catalysts, flow aids and additives which improve for example scratch resistance, UV-stability, gloss.

The present invention also provides a process of the preparation for the biocidal powder coating composition, which is characterized in that the biocides are homogenously mixed or bonded with the particles of thermoplastic and/or thermosetting powder,
a) by treating the individual powder coating particles to soften their surface and adhering the bioactive material and bonding it homogenously to them, or
b) by dissolving or mixing the biocides and the other components of the powder coating formulation in an organic liquid or supercritical fluid and removing the liquid.

In accordance with the invention the liquid bioactive material may be mixed initially with particles of a solid support material such as silica, clay or other resins (master batch), and such dry mixture containing the liquid bioactive material can then be mixed into the formulation of resin.

For example, the liquid bioactive material can be mixed with particles of the solid support material, particularly into the fumed solid material, e.g. silica, at e.g. room temperature using high shear yielding high concentrations of active ingredients. The solid support material can absorb the liquid biocidal particles and transported into the powder composition via the support material. The resulting granular solid then can be treated as a solid biocide material for the purposes of the invention. Solid support material are for example silica and clay.

Another method is to mix the liquid biocide with a portion of powder resins and if necessary with some additives to get a master batch, which than may be mixed with the other components of the coating composition.

The preferred method is mixing the liquid biocide with particles of a solid support material such as silica and clay.

The specialty selected solid bioactive material can be premixed directly with the formulation components.

In accordance with the invention the solid biocides may be incorporated in the powder composition via a "bonding" process. This process is a simple and comfortable method for modification, preferably for a subsequent modification, of powder coating compositions with one or more bioactive material. Particularly the particles of the solid biocide are bonded with the coating powder particles using an impact fusion. For this purpose the powder coating base can be produced in the customary way for example via the melt extrusion. Then the individual powder coating particles are treated to softening their surface so that the bioactive material adhere to them and is homogenously bonded with them.

Preferably the solid biocides may be incorporated into the powder composition via the above bonding process.

The liquid and solid biocides also may be incorporated within the powder coating particles by dissolving or mixing them and the other powder coating formulation components in a suitable solvent, e.g. organic liquids or supercritical fluids, and then removing the liquid in such a manner as to yield a powder or a solid product which can be processed into a powder.

The biocidal powder coating composition can be applied to metal or non-metal surfaces, for example plastics, wood, glass, textile webs by any convenient spraying technique, for example manual or automatic electrostatic or tribocharged spraying. Other methods, such as fluidized bed coating methods or flame spraying, may also be used.

Depending on the requirements of the coated article chemical pre-treatment and/or primering (grounding) of the substrate surface may be necessary.

Particularly potential applications for these powder coatings may include food preparation areas, hospitals, garbage disposals, stockyard areas, animal feed troughs, schools, kitchens, swimming pool areas, dishwashers, automobile fixtures, public access fixtures, public transportation fixtures, toys, and other industrial, agricultural or consumer products.

Charged particles of the powder coating composition are sprayed onto the substrate until a desired thickness is achieved.

After the deposition is finished, the coated substrate is subsequently taken to an oven for example an electrical or gas-fired oven, to cure the coating. The curing temperature is generally in the range of 100°C to 270°C. The curing time may be about 5 to 20 minutes for many substrates, but may vary from less than 1 minute to greater than one hour depending on the type of the coating and curing system.

In addition to the thermal method, curing may also be achieved by an electron beam method or photochemical methods, such as ultraviolet and infrared.

Curing of the coating can be effected by heat conduction, convection, radiation, or combination of them.

The powder coating composition may be applied to the substrates so that contact with the coating either kills or inhibits the growth of bacteria and/or fungi.

Using the biocidal powder coating composition prepared in accordance with the invention it is possible to prepare powder systems having a stable biocidal activity for a long time and excellent coated film properties, for example chemical and corrosion resistance and durability. Advantageously, there are not visible bubbles -indicative of volatilizing of the biocides- in the coating film after the curing process. The presence of bubbles usually indicates that some of the bioactive material may have been volatilized during the curing process.

As a result of the production process in accordance with the invention the bioactive material can uniformly mixed or bonded with the particles of the thermoplastic and/or thermosetting resin, and a homogenously coating layer results .

Particularly in the case of the special selected solid biocides there is no requirement that the solid bioactive material must have a specific particle size or a specific particle size distribution, particularly in the case of using the "bonding" process. Preferably by means of the bonding process for solid biocides the number of extremely fine powder particles can be reduced. Moreover because of the bonding the bioactive material to the powder particles the overspray can be reclaimed and reused for the application process.

In the case of liquid biocides a homogeneous distribution of the biocide to the powder coating particles may preferably be achieved by the production process using a solid support material such as silica and clay.

This invention also relates to the use of biocidal powder coating compositions for coating substrates and to a substrate coated with a biocidal powder coating composition according to the invention.

### Example:

### Powder coating base:

a catalyzed, phenolic-cured epoxy powder coating with the following components:

| **Chemical Components** | **Parts per Hundred** |
|---|---|
| Shell Epon ® DPS 2014 | 60 |
| Shell Epon ® DPS 2012 | 40 |
| Dow Chemical ®DEH 84 | 37 |
| Estron Resiflow ®P-67 | 1.3 |
| Harcros Copperas ®Red Iron Oxide R-9998 | 0.06 |
| BASF-Sicotrans ®Yellow L 1916 | 0.12 |
| Cabot Cab-o-Sil ®M5 | 0.27 |

Both Shell Epon ®DPS 2014 and Shell Epon ®DPS 2012 are polymer reaction products of bisphenol A and epichlorohydrin. Dow Chemical ®DEH 84 is a polymer which is a product of the reaction of bisphenol A and epichlorhydrin mixed with bisphenol A and 2-methylimidazole. Estron Resiflow ®P-67, Harcros Copperas ®Red Iron Oxide R-9998, BASF Sicotrans ®Yed Cabot Cab-O-Sil ®M5 are used as fillers, flow aids and pigment

### Biocides:

N-(tricholoromethyl)-thiolphthalimide ( Fungitrol® 1 1 ), dibromocyanoacetamide (Amerstat® 300), butyl-p-hydroxy-benzoate (Butyl Parabens® ).

### Testing for Biocidal Activity

Biocidal activity tests are carried out to determine if certain selected bactericides can maintain their biological activity after being incorporated into powder coatings.

### 1.Sample Preparation

Samples containing one of the biocides at two concentrations ( 0,1 and 1,0 % of the resin weight) in the coating matrix and two degrees of cure of the coating are prepared. The substrates consist of 2,54 cm x 2,54 cm x 0,08 cm steel coupons and both the front and back of the coupons are coated with a given coating formulation. The edges are coated with a black silicone resin to prevent rusting of the coupon which could interfere with the interpretation of the results of the experiment.

Controls containing a formulation with no additive and controls containing only the black silicone resin used for edge coverage are included.

The target bacterial organisms include Pseudomonas aeruginosa, Escherichia coli, and Salmonella typhinurium. Stock cocktails of the bacteria which contain mixtures of the organisms may also be used.

The target fungus spores include Aspergillus niger, Penicillium funiculosum and Aerobasidium pullilans.

### 2.Samples Description

Five groups of samples are prepared according to the following procedures:
For each of the biocides, two panels with coating thicknesses of 177.8 to 203.2 µm (7 to 8 mils) are cured with a normal schedule: 193°C for 10 minutes.
For each of the biocides, two panels with a biocide concentration of 0.1% and 1% and with coating thicknesses of 177.8 to 203.2 µm (7 to 8 mils) are cured with a normal schedule.
Each of the following samples was prepared with a biocide concentration of 1 % of the resin weight.
For each of the biocides, two panels with coating thicknesses of 76.2 to 114.3 µm (3.0 to 4.5 mils) are cured with a normal schedule.

### 3.Biocidal Activity Tests

Each sample is submitted for two tests: (1) Zone of inhibition for Bacteria or fungal colonies, and (2) Bacterial or Spore Counts. These tests are employed to determine the efficiency or strength of each sample after four weeks. Zone of inhibition is measured in millimeters and the Bacterial or Spore Counts are numerical.

The test organisms used are Pseudomonas aeruginosa, Staphylococcus aureus), and Escherichia coli. The coupons are aseptically placed on the seeded media with the coated surface contacting the agar and incubated according to ASTM G-22. After incubation, the coated surfaces are then rubbed with sterile cotton swabs and the swabs are then streaked onto Tryptic Soy Agar (TSA) plates. The plates are incubated for 24 bis 48 hours at 32°C and then rated on a scale of "O" (good performance) to "4" (poor performance) based
upon the number of colony forming units observed.

Resistence to fungal growth is tested in accordance with ASTM D 5590-95. The organisms targeted were Aspergillus niger (ATCC 6275), Penicillium funiculosum (ATCC 11 797); and
Aureobasidium pullulans (ATCC 9348) in a mixed spore suspension. The samples were aseptically placed onto a solidified malt agar plate and than each sample inoculated.

### Results

### 1. Inhibition of Bacterial Growth

### 1.1. Data from studies of inhibition of bacterial growth are summarized in the following.

A bacterial coverage of 0 would indicate no detectable bacteria, while a rating of 4 would indicate total coverage:

| **BIOCIDES** | **AVERAGE BACTERIAL COVERAGE** |
|---|---|
| CONTROLS | 3.0 ± 1.7 |
| FUNGITROL® 1 1 (HULS) | 2.8 ± 1.8 |
| BUTYL PARABENS® (ISI) | 2.6 ± 1.3 |
| AMERSTAT® 300 (DREW) | 1.6 ± 1.5 |

### 1.2. Effect of Concentration

The effect of decreasing the biocide amount from 1.0 % to 0.1 % by weight of the total resin is minimal; there is little effect on the biocidal properties of the coating.

Consequently, the lower concentration may be sufficient.

### 1.3. Effect of Overbake

The effect of overboking the sample is to increase bacterial resistance. This is apparently intrinsic to the coating and is the strongest factor influencing the bacterial resistance of the films outside of the choice of the biocide. Increasing the cross-linking density of the coating through overbaking increases its resistance to attack.

### 1.4. Effect of Coating thickness

Decreasing the coating thickness by a factor of about two had very little effect on the biocidal properties of the film.

### 1.5. Discussion and conclusion

It has been shown, for a four-week exposure, that Amerstat® 300 formulation has the best performance and Butyl Parabens® also performs well.

### 2. Anti-fungal Properties of Biocide-containing powder Coatings

The biocides listed above were also exposed to fungus spores for a period of four weeks.

The results of this study showed that the powder coating base has a strong intrinsic resistance to fungal attack, however, several of the coatings showed no growth of fungi on their surface after four weeks of exposure. At a concentration of 1 %, coating powders made with Butyl Porabens® were free of visible fungal growth. Fungitrol ® 1 l and Amerstat ® 300 had a very small amount of fungal growth but the level was within the experimental detection error.

### 3. Short-Term Bactericidal Properties of Biocide-Containing Powder Coatings

Steel coupons were coated with the Fungitrol ® 11, Butyl Parabens ®, and Amerstat ® 300 biocide formulations - 0.1 % and 1 % - and were exposed them as per ASTM D 5588-94 to a mixture containing the bacteria Pseudomonas aeruginosa, Staphylococcus aureus, and Escherichia coli.

After the coupons were washed with a 70 % ethanol / water solution, they were placed in a sterile Petri dish, inoculated, and incubated at 32 °C for the duration of the test. At appropriate intervals, each sample was checked for the presence of viable microorganisms by streaking each sample with a sterile cotton swab, then streaking the swab onto Tryptic Soy Agar. The plates were incubated for 48 hours at 32 °C. The absence of microbial growth along the streak indicated that the corresponding sample did not contain viable microbial cells. The presence of microbial growth indicated non-sterility, i.e., the sample contained viable microbial contamination. Samples were examined for low levels of bacterial contamination by transferring an aliquot with a sterile cotton swab to Tryptic Soy Broth in culture tubes. The tubes were incubated for 24 hours at 32 °C, streaked onto Tryptic Soy Agar plates, and the plates incubated for 24 - 48 hours at 32 °C.

Heavy bacterial growth was detected initially and after 4 hours for all samples; however, after 24 hour of exposure, there was a difference among the samples. After 72 hours of incubation, the Butyl Parabens ® formulations are free of bacterial growth and were actually sterile.

The control and Fungitrol ® 1 1 formulations showed low to heavy growth.

### 4. Short-Term Fungicidal Properties of Biocide-Containing Powder Coatings

Steel coupons were coatet with the biocide formulations listed above and exposed them as per ASTM D 5588-94 to a mixture containing the fungus spores of Aspergillus niger, Penicillium funiculosum, and Aerobasidium pullilans. After the coupons were washed with a 70 % ethanol / water solution, they were placed in a sterile Petri dish, inoculated, and incubated at 28 °C for the duration of the test. At appropriate intervals, each sample was checked for the presence of viable microorganisms by streaking each sample with a sterile cotton swab then streaking the swab onto Potato Dextrose Agar (adjusted to pH 3.5 for fungi). These plates were also incubated at 28 °C. The absence of microbial growth along the streak indicated that the corresponding sample did not contain viable microbial cells. The presence of microbial growth indicated non-sterility, i.e.,
the sample contained viable microbial contamination.

Heavy fungal growth was detected initially and after 4 hours for all samples; however, once again, at 24 hours of exposure, there was a difference among the samples. After 72 hours of incubation, the control, Fungitrol ® 11, and Butyl Parabens ® formulations were free of (or show very low levels of) bacterial growth. One control set showed heavy fungal growth.

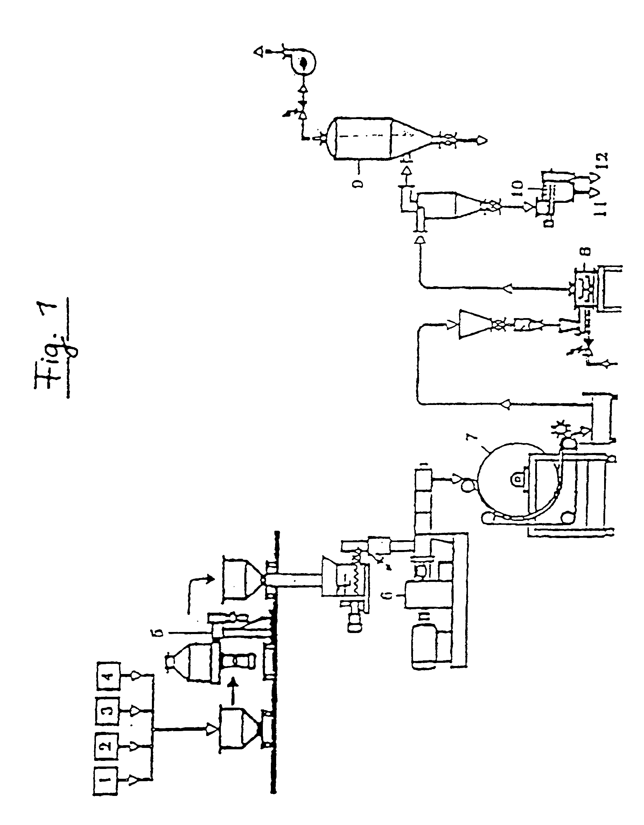

## Claims

1. Biocidal powder coating composition comprising thermoplastic and/or thermosetting resins, based on epoxy, polyester, acrylic and/or polyurethane resins, and biocides, wherein the biocides are liquid bioactive materials, liquid biocides mixed with particles of a solid support material and/or selected solid bioactive materials which do not react with the other components of the composition, **characterized in that** the biocides are homogenously mixed or bonded with the particles of the thermoplastic and/or thermosetting powder,
a) by treating the individual powder coating particles to soften their surface and adhering the bioactive material and bonding it homogenously to them or
b) by dissolving or mixing the biocides and the other components of the powder coating formulation in an organic liquid or supercritical fluid and removing the liquid.

2. The powder coating composition according to Claim 1, comprising 80 to 99.99 % by weight of the total resin of one or more thermoplastic and/or thermosetting resins based on epoxy, polyester, acrylate and/or polyurethane resins and 0.01 to 20 % by weight of the total resins of the one or more liquid biocides and/or solid biocides.

3. The powder coating composition according to Claim 1 and 2, **characterized in that** the liquid biocides are biocides which cannot be dry blended into a powder to yield a coating.

4. The powder coating composition according to Claim 3, **characterized in that** the liquid biocides include cyonoacetamides and/or liquid thiazine thiones.

5. The powder coating composition according to Claim 4, **characterized in that** the liquid biocides include dibromocyanoacetamide.

6. The powder coating composition according to Claim 1 and 2, **characterized in that** the solid biocides are selected from the group of solid thiazine thiones, thiolphthalimides, hydroxybenzoates, nitropropane diols, tolysulfones and/or phthalonitriles.

7. The powder coating composition according to Claim 6, **characterized in that** the solid biocides are selected from the group of N-(trichloromethyl-thiolphthalimide), 2-bromo-2-nitropropane-1,3-diol, 3,5-dimethyltetrahydro-1,3,5-2H-thiazine-2-thione, diiodomethyl-p-tolysulfone and/or butyl-p-hydroxybenzoate.

8. Process for preparing the biocidal powder coating composition according to any of claims 1 to 7, **characterized in that** the biocides are homogenously mixed or bonded with the particles of thermoplastic and/or thermosetting powder,
a) by treating the individual powder coating particles to soften their surface and adhering the bioactive material and bonding it homogenously to them, or
b) by dissolving or mixing the biocides and the other components of the powder coating formulation in an organic liquid or supercritical fluid and removing the liquid.

9. Use of the powder coating composition of any of claims 1 to 7 for coating of substrates.

10. Substrates, coated using a biocidal powder coating composition of any of claims 1 to 7.

## Patentansprüche

1. Biozide Pulverbeschichtungszusammensetzung, die thermoplastische und/oder hitzehärtbare Harze auf Basis von Epoxy-, Polyester-, Acryl- und/oder Polyurethanharzen und Biozide umfasst, wobei die Biozide flüssige bioaktive Materialien sind, flüssige Biozide, die mit Partikeln eines festen Trägermaterials gemischt sind, und/oder ausgewählte feste bioaktive Materialien sind, die nicht mit den anderen Komponenten der Zusammensetzung reagieren, **dadurch gekennzeichnet, dass** die Biozide homogen gemischt mit den oder gebunden an die Partikel des thermoplastischen und/oder hitzehärtbaren Pulvers sind,
a) durch Behandlung der einzelnen Pulverbeschichtungspartikel, um ihre Oberflächen weich zu machen, und durch Anhaftung und Binden des bioaktiven Materials in homogener Weise an diese Partikel, oder
b) durch Lösen oder Mischen der Biozide und der anderen Komponenten der Pulverbeschichtungsformulierung in einer organischen Flüssigkeit oder in einem überkritischen Fluid und durch Entfernung der Flüssigkeit.

2. Pulverbeschichtungszusammensetzung nach Anspruch 1, die auf Basis des Gesamtharzes 80 bis 99,99 Gewichtsprozent von einem oder mehreren, thermoplastischen und/oder hitzehärtbaren Harzen auf Basis von Epoxy-, Polyester-, Acrylat- und/oder Polyurethanharzen sowie 0,01 bis 20 Gewichtsprozent von einem oder mehreren flüssigen Bioziden und/oder festen Bioziden umfasst.

3. Pulverbeschichtungszusammensetzung nach Anspruch 1 und 2, **dadurch gekennzeichnet, dass** die flüssigen Biozide solche Biozide sind, die nicht trocken in ein Pulver gemischt werden können, um eine Beschichtung zu erzielen.

4. Pulverbeschichtungszusammensetzung nach Anspruch 3, **dadurch gekennzeichnet, dass** die flüssigen Biozide Cyanoacetamide und/oder flüssige Thiazinthione umfassen.

5. Pulverbeschichtungszusammensetzung nach Anspruch 4, **dadurch gekennzeichnet, dass** die flüssigen Biozide Dibromcyanoacetamid umfasst.

6. Pulverbeschichtungszusammensetzung nach Anspruch 1 und 2, **dadurch gekennzeichnet, dass** die festen Biozide aus der Gruppe ausgewählt sind, die feste Thiazinthione, Thiolphthalimide, Hydroxybenzoate, Nitropropandiole, Tolylsulfone und/oder Phthalonitrile umfasst.

7. Pulverbeschichtungszusammensetzung nach Anspruch 6, **dadurch gekennzeichnet, dass** die festen Biozide aus der Gruppe ausgewählt sind, die N-(Trichlormethylthiolphthalimid), 2-Brom-2-nitropropan-1,3-diol, 3,5-Dimethyltetrahydro-1,3,5-2H-thiazin-2-thion, Diiodmethyl-p-tolylsulfon und/oder Butyl-p-hydroxybenzoat umfasst.

8. Verfahren zur Herstellung einer bioziden Pulverbeschichtungszusammensetzung nach einem der Ansprüche 1 bis 7, **dadurch gekennzeichnet, dass** die Biozide homogen gemischt mit den oder gebunden an die Partikel des thermoplastischen und/oder hitzehärtbaren Pulvers sind,
a) durch Behandlung der einzelnen Pulverbeschichtungspartikel, um ihre Oberflächen weich zu machen, und Anhaftung und Binden des bioaktiven Materials in homogener Weise an diese Partikel, oder
b) durch Lösen oder Mischen der Biozide und der anderen Komponenten der Pulverbeschichtungsformulierung in einer organischen Flüssigkeit oder einem superkritischen Fluid und durch Entfernung der Flüssigkeit.

9. Verwendung der Pulverbeschichtungszusammensetzung nach einem der Ansprüche 1 bis 7 für die Beschichtung von Substraten.

10. Substrate, die unter Verwendung einer bioziden Pulverbeschichtungszusammensetzung nach einem der Ansprüche 1 bis 7 beschichtet sind.

## Revendications

1. Composition de revêtement en poudre biocide comprenant des résines thermoplastiques et/ou thermodurcissables, basée sur des résines époxy, polyester, acryliques et/ou polyuréthanes et des biocides, où les biocides sont des matériaux bioactifs liquides, des biocides liquides mélangés à des particules d'un matériau de support solide, et/ou des matériaux bioactifs solides sélectionnés qui ne réagissent pas avec les autres composants de la composition, **caractérisée en ce que** les biocides sont mélangés de manière homogène ou liés aux particules d'une poudre thermoplastique et/ou thermodurcissable,
a) en traitant les particules du revêtement en poudre individuelles afin de ramollir leur surface et en faisant adhérer et en liant le matériau bioactif de manière homogène à celles-ci ou
b) en dissolvant ou en mélangeant les biocides et les autres composants de la formulation de revêtement en poudre dans un liquide organique ou un fluide supercritique et en enlevant le liquide.

2. Composition de revêtement en poudre selon la revendication 1, comprenant de 80 à 99,99% en poids de la résine totale d'au moins une résine thermoplastique et/ou thermodurcissable basée sur des résines époxy, polyester, acryliques et/ou polyuréthanes et de 0,01 à 20% en poids des résines totales d'au moins un biocide liquide et/ou biocide solide.

3. Composition de revêtement en poudre selon la revendication 1 et la revendication 2 **caractérisée en ce que** les biocides liquides sont des biocides qui ne peuvent pas être mélangés à sec sous forme d'une poudre pour obtenir un revêtement.

4. Composition de revêtement en poudre selon la revendication 3, **caractérisée en ce que** les biocides liquides incluent des cyanoacétamides et/ou des thiones thiaziniques liquides.

5. Composition de revêtement en poudre selon la revendication 4, **caractérisée en ce que** les biocides liquides incluent du dibromocyanoacétamide.

6. Composition de revêtement en poudre selon la revendication 1 et la revendication 2, **caractérisée en ce que** les biocides solides sont sélectionnés parmi le groupe constitué par des thiones thiaziniques, des thiolphthalimides, des hydroxybenzoates, des diols de nitropropane, des tolysulfones et/ou des phthalonitriles solides.

7. Composition de revêtement en poudre selon la revendication 6, **caractérisée en ce que** les biocides solides sont sélectionnés parmi le groupe constitué par le N-(trichlorométhyl-thiolphthalimide), le 2-bromo-2-nitropropane-1,3-diol, le 3,5-diméthyltétrahydro-1,3,5-2H-thiazine-2-thione, la diiodométhyl-p-tolysulfone et/ou le butyl-p-hydroxybenzoate.

8. Procédé de préparation de la composition de revêtement en poudre biocide selon l'une quelconque des revendications 1 à 7, **caractérisé en ce que** les biocides sont mélangés de manière homogène ou liés aux particules d'une poudre thermoplastique et/ou thermodurcissable,
a) en traitant les particules du revêtement en poudre individuelles afin de ramollir leur surface et en faisant adhérer et en liant matériau bioactif à celles-ci de manière homogène ou
b) en dissolvant ou en mélangeant les biocides et les autres composants de la formulation de revêtement en poudre dans un liquide organique ou un fluide supercritique et en enlevant le liquide.

9. Utilisation de la composition de revêtement en poudre selon l'une quelconque des revendications 1 à 7 pour le revêtement de substrats.

10. Substrats recouverts en utilisant une composition de revêtement en poudre biocide selon l'une quelconque des revendications 1 à 7.
